# EUROPEAN PATENT SPECIFICATION

(11) **EP 3 939 450 B1**
(45) Date of publication and mention of the grant of the patent: **26.07.2023**
(21) Application number: 20830815.5
(22) Date of filing: 02.06.2020
(51) Int. Cl.: A24F 40/57, A24F 40/50, A24F 40/65

(54) **ELECTRONIC CIGARETTE PREHEATING METHOD AND PREHEATING SYSTEM**
VORWÄRMVERFAHREN UND -SYSTEM FÜR EINE ELEKTRONISCHE ZIGARETTE
PROCÉDÉ ET SYSTÈME DE PRÉCHAUFFAGE POUR CIGARETTE ÉLECTRONIQUE

(30) Priority: 26.06.2019 CN 201910562931
(43) Date of publication of application: 19.01.2022
(73) Proprietor: Huizhou Happy Vaping Technology Limited, Huizhou, Guangdong 516000 (CN)
(72) Inventor: LIN, Guangrong, Shenzhen, Guangdong 518104 (CN); ZHENG, Xianbin, Shenzhen, Guangdong 518104 (CN); ZHANG, Xiyong, Shenzhen, Guangdong 518104 (CN)
(74) Representative: Meyer, Thorsten
(86) International application number: PCT/CN2020/094006
(87) International publication number: WO 2020/259229

(56) References cited:
- WO-A1-2018/201858
- WO-A1-2019/001386
- WO-A1-2019/031871

## Description

### TECHNICAL FIELD

The disclosure relates to the field of electronic cigarette preheating technology, more particularly to an electronic cigarette preheating method and preheating system.

### BACKGROUND

The electronic cigarette usually heats and vaporizes liquid substances or paste-like substances, such as drugs and cigarette liquid, to produce aerosol or vapor for users to use. As people pay more attention to their health, they realize that tobacco may be harmful to health. Thus, the electronic cigarettes are widely used.

Existing electronic cigarette usually comprises cigarette liquid and a heating device for vaporizing the cigarette liquid. The cigarette liquid may be stored inside the liquid storage chamber. During vaporization, the cigarette liquid stored inside the liquid storage chamber may be permeated or fed to the heating device. Usually, when an electronic cigarette is turned on to operate, no preheating method or procedure is provided to warm up the electronic cigarette. In particular when the electronic cigarette is used in cold winter or at cold areas such as higher latitudes or higher elevations, the viscosity of the cigarette liquid or tobacco tar or liquid substances containing drugs of the electronic cigarette is increased and the fluidity thereof is reduced at low temperature. In such a case, it is not easy for the cigarette liquid or drugs to be permeated or fed to the heating device for vaporization, such that the vapor can hardly be produced when the electronic cigarette initially starts. To this end, it is desired to provide a preheating method which preheats the cigarette liquid or liquid substances containing drugs by means of the heating device during power-on self-test of the electronic cigarette, to facilitate production of the vapor.

Patent application WO2019001386A1 disclosed an electronic cigarette and a method for pre-heating an electronic cigarette. The method comprises: initialising an electronic cigarette; acquiring and/or invoking a pre-heating parameter of the electronic cigarette; according to the acquired or invoked pre-heating parameter of the electronic cigarette, controlling an atomisation apparatus of the electronic cigarette so that same performs pre-heating; and starting the electronic cigarette and smoking with same. By means of the electronic cigarette and the method for pre-heating an electronic cigarette disclosed in the present invention, an atomisation apparatus of the electronic cigarette is controlled to perform pre-heating by setting a pre-heating parameter of the electronic cigarette, wherein the pre-heating power and pre-heating time of the electronic cigarette are controllable, and a user has an intense experience.

Patent application WO2019031871A1 disclosed an electronic cigarette control device according to an embodiment comprises: a communication unit for establishing a communication connection to at least one device; and a processor for controlling an electronic cigarette according to a control message for the electronic cigarette, received from the at least one device through the established communication connection.

Patent application WO2018201858A1 disclosed an atomizer, atomizing device, and method of controlling an atomizer. The atomizer comprises a second heating element for heating an aerosol forming substrate. The atomizing device comprises the atomizer and a power supply electrically connected to a first heating element and the second heating element of the atomizer. The control method comprises the following steps: a) activating a second heating element to heat an aerosol forming substrate in a liquid container cavity with a first heating power, such that the aerosol forming substrate is absorbed by a liquid delivering element; b) and activating a first heating element to atomize the aerosol forming substrate absorbed by the liquid delivering element. The present invention employs a second heating element independent from an atomizing component to heat an aerosol forming substrate in a liquid container cavity, such that the aerosol forming substrate has an elevated temperature, reduced viscosity and increased flowability so as to be absorbed by a liquid delivering element quickly, preventing the damage to the atomizing component resulted from dry burning.

### SUMMARY

### Technical problem

An object of the disclosure is to overcome the above shortcomings and provide an electronic cigarette preheating method and preheating system.

### Technical solutions

The disclosure provides a technical solution as follow. According to an electronic cigarette preheating method, setting preheating parameters and a preheating routine in a microcontroller MCU arranged in the electronic cigarette, performing data interaction by a communication connection established between an intelligent terminal and the electronic cigarette, and displaying and changing the preheating parameters on a control software interface of the intelligent terminal. The preheating parameters at least comprise preset temperature value, and preset heating time or preset target temperature value. The preheating routine comprises: when the electronic cigarette is turned on, sending preheating parameters changed on the control software interface to the microcontroller MCU to replace previous preset preheating parameters; detecting real-time temperature value by means of a temperature sensor arranged in the electronic cigarette; by means of the microcontroller MCU, comparing the real-time temperature value with the preset temperature value and determining whether preheating of the cigarette liquid stored inside the liquid storage chamber is required or not, if no, directly entering an available stand-by state of the electronic cigarette, if yes, controlling the heating device arranged in the electronic cigarette by means of the microcontroller MCU to perform heating for the preset heating time or until the preset target temperature value is reached, and then ending the preheating and entering the available stand-by state of the electronic cigarette. The preheating parameters further comprise preset stand-by time. After the electronic cigarette enters the available stand-by state, the electronic cigarette will automatically shut down if the electronic cigarette detects that the user does not take even a puff within the preset stand-by time. The preset heating time is a constant value or set as a function which is inversely proportional to the real-time temperature value. That is, the lower the real-time temperature value, the longer the period of the preset heating time. The microcontroller MCU is configured to recurrently detect the real-time temperature and determine whether the preheating is required again or not within the preset stand-by time, if yes, controlling the heating device of the electronic cigarette by means of the microcontroller MCU to perform heating again.

Preferably, the control software interface may be configured with a preheating switch. When the preheating switch is turned off, sending an instruction of stopping preheating to the electronic cigarette by means of the intelligent terminal, and then stopping the preheating routine by means of the microcontroller MCU such that the heating device of the electronic cigarette is controlled to not preheat or stop preheating.

Preferably, when the microcontroller MCU determines the preheating is required, controlling the LED indicator light arranged on the electronic cigarette by means of the microcontroller MCU to emit light for warning. When the preheating is finished, controlling the vibrator arranged on the electronic cigarette by means of the microcontroller MCU to provide vibration for warning.

Preferably, the preheating parameters may further comprise preset preheating power. The preset preheating power may be a constant value or set as a function which is inversely proportional to the real-time temperature value. That is, the lower the real-time temperature value, the greater the preset preheating power.

Preferably, the method may comprise steps of:
(1) presetting the preheating parameters and preheating routine on the microcontroller MCU;
(2) opening the intelligent terminal to change the preheating parameters or keep the preheating parameters unchanged on the control software interface;
(3) performing communication between the electronic cigarette and the intelligent terminal;
(4) turning on the electronic cigarette;
(5) by means of the microcontroller MCU arranged in the electronic cigarette, determining whether preheating parameters changed on the control software interface are received or not, if yes, go to next step; if no, go to step (7);
(6) updating the preheating parameters preset on the microcontroller MCU using the preheating parameters changed on the control software interface;
(7) detecting the real-time temperature value by means of the temperature sensor, and reading the real-time temperature value by means of the microcontroller MCU;
(8) determining whether the real-time temperature value is greater than the preset temperature value or not by means of the microcontroller MCU, if yes, go to step (10); if no, go to next step;
(9) controlling the heating device by means of the microcontroller MCU to perform heating for the preset heating time or until the preset target temperature value is reached;
(10) entering the available stand-by state of the electronic cigarette;
(11) going back to step (7) as the stand-by time does not pass;
(12) automatically shutting down the electronic cigarette as the stand-by time exceeds the preset stand-by time.

The disclosure provides another technical solution as follow. An electronic cigarette preheating system comprises an electronic cigarette and an intelligent terminal which establish a communication connection with each other to perform data interaction. The electronic cigarette comprises a liquid storage chamber, a heating device, a microcontroller MCU, and a temperature sensor. The microcontroller MCU is installed with the preheating parameters and the preheating routine. The intelligent terminal comprises the control software interface allowed for displaying and changing the preheating parameters. The preheating parameters at least include the preset temperature value, and the preset heating time or the preset target temperature value. The preheating routine is configured in such a manner that, when the electronic cigarette is turned on, the preheating parameters changed on the control software interface are sent to the microcontroller MCU, to replace previous preset preheating parameters. The temperature sensor is configured to detect the real-time temperature value. The microcontroller MCU is configured to compare the real-time temperature value with the preset temperature value and determine whether preheating of the cigarette liquid stored inside the liquid storage chamber is required or not. If no, the electronic cigarette directly enters an available stand-by state. If yes, the heating device arranged in the electronic cigarette is controlled by means of the microcontroller MCU to perform heating for the preset heating time or until the preset target temperature value is reached. Then, the preheating ends, and the electronic cigarette enters the available stand-by state. The preheating parameters further include the preset stand-by time. The preheating routine is configured in such a manner that, after the electronic cigarette enters the available stand-by state, the electronic cigarette will automatically shut down if the electronic cigarette detects that the user does not take even a puff within the preset stand-by time. The preset heating time is a constant value or set as a function which is inversely proportional to the real-time temperature value. That is, the lower the real-time temperature value, the longer the period of the heating time. The microcontroller MCU is configured to recurrently detect the real-time temperature and determine whether the preheating is required again or not within the preset stand-by time, if yes, controlling the heating device of the electronic cigarette by means of the microcontroller MCU to perform heating again.

Preferably, the preheating parameters may further include the preset preheating power. The preset preheating power may be a constant value or set as a function which is inversely proportional to the real-time temperature value. That is, the lower the real-time temperature value, the greater the preset preheating power.

Preferably, the control software interface may be configured with a preheating switch. When the preheating switch is turned off, the intelligent terminal sends an instruction of stopping preheating to the electronic cigarette, and then the microcontroller MCU stops the preheating routine such that the heating device of the electronic cigarette is controlled to not preheat or stop preheating.

Preferably, the electronic cigarette may be arranged with an LED indicator light and a vibrator. Herein, the LED indicator light may be controlled by means of the microcontroller MCU to emit light for warning when the preheating is required, and the vibrator may be controlled by means of the microcontroller MCU to provide vibration for warning when the preheating is finished.

### Advantages

The electronic cigarette preheating method and preheating system according to the disclosure achieve parameter setting and controlling by the communication connection established between the intelligent terminal and the electronic cigarette. The electronic cigarette is installed with automatic preheating control routine. After detecting real-time temperature, the electronic cigarette is capable of automatically determining whether preheating is required. The heating device of the electronic cigarette is used to perform heating and generate heat energy. As the heat energy is transferred to the liquid storage chamber of the electronic cigarette, the cigarette liquid or liquid substances containing drugs may be preheated.

### BRIEF DESCRIPTION OF THE DRAWINGS

FIG. 1 is a first flow chart of a control method according to the disclosure;
FIG.2 is a second flow chart of a control method according to the disclosure;
FIG.3 is a third flow chart of a control method according to the disclosure;
FIG.4 is a fourth flow chart of a control method according to the disclosure;
FIG.5 is a functional structural diagram according to the disclosure.

### DETAILED DESCRIPTION OF ILLUSTRATED EMBODIMENTS

In order to make purposes, technical solutions and advantages of the disclosure clearer, the disclosure will be further explained in detail with reference to drawings and embodiments described hereinafter. It should be understood that the specific embodiments described herein are only used to explain the present invention and are not intended to limit the present invention.

According to an electronic cigarette preheating method of the disclosure, setting preheating parameters and preheating routine in a microcontroller MCU arranged in the electronic cigarette, performing data interaction by a communication connection established between an intelligent terminal and the electronic cigarette, and displaying and changing the preheating parameters on a control software interface of the intelligent terminal. The preheating parameters at least include preset temperature value, and preset heating time or preset target temperature value. The preheating routine comprises: when turning on the electronic cigarette, sending preheating parameters changed on the control software interface to the microcontroller MCU to replace previous preset preheating parameters; detecting real-time temperature value by means of a temperature sensor arranged in the electronic cigarette; by means of the microcontroller MCU, comparing the real-time temperature value with the preset temperature value, and determining whether preheating of the cigarette liquid stored inside the liquid storage chamber is required or not, if no, directly entering an available stand-by state of the electronic cigarette, if yes, controlling the heating device arranged in the electronic cigarette by means of the microcontroller MCU to perform preheating for the preset heating time or until the preset target temperature value is reached, and then ending the preheating and entering the available stand-by state of the electronic cigarette.

Among the preheating parameters in the embodiment, either the preset heating time or the preset target temperature value, but not both at the same time, may be set.

The cigarette liquid stored inside the liquid storage chamber according to the disclosure may be flowable cigarette liquid, or tobacco tar having poor fluidity or waxy solid formed by solidification of tobacco tar, or liquid substances containing drugs, or waxy solid formed by solidification of drug liquid, etc.

### First embodiment

In the electronic cigarette preheating method according to the embodiment, the communication connection established between the intelligent terminal and the electronic cigarette may be USB wired connection. The intelligent terminal may be a laptop installed with control software and display interface. After the control software is opened, new preheating parameters may be set on the display interface. The preheating parameters may include the preset temperature value and the preset target temperature value. In particular, the preset temperature value may be set to a range of -10°C~10°C, and the preset target temperature value may be set to a range of 10°C~80°C.

In another embodiment, the communication connection established between the intelligent terminal and the electronic cigarette may be wireless signal connection, e.g., wireless Bluetooth connection, or wireless WIFI connection, or wireless radio frequency (RFID) connection.

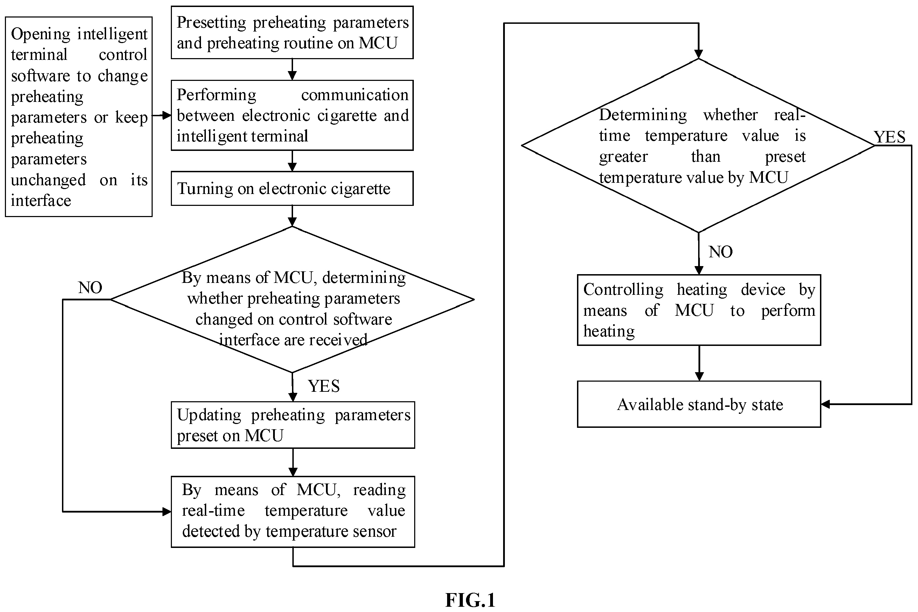

Referring to FIG. 1, the electronic cigarette preheating method according to the first embodiment comprises steps as follows.
(1) Presetting the preheating parameters and the preheating routine on the microcontroller MCU;
(2) Opening the intelligent terminal to change the preheating parameters or keep the preheating parameters unchanged on the control software interface;
(3) Performing communication between the electronic cigarette and the intelligent terminal;
(4) Turning on the electronic cigarette;
(5) By means of the microcontroller MCU arranged in the electronic cigarette, determining whether the preheating parameters changed on the control software interface are received or not, if yes, go to next step; if no, go to step (7);
(6) Updating the preheating parameters preset on the microcontroller MCU using the preheating parameters changed on the control software interface;
(7) Detecting the real-time temperature value by means of the temperature sensor, and reading the real-time temperature value by means of the microcontroller MCU;
(8) Determining whether the real-time temperature value is greater than the preset temperature value or not by means of the microcontroller MCU, if yes, go to step (10); if no, go to next step;
(9) Controlling the heating device by means of the microcontroller MCU to perform heating until the preset target temperature value is reached;
(10) Entering the available stand-by state of the electronic cigarette.

### Second embodiment

In the electronic cigarette preheating method according to the embodiment, the communication connection established between the intelligent terminal and the electronic cigarette may be wireless Bluetooth connection. The intelligent terminal may be a laptop installed with control software and display interface. After the control software is opened, new preheating parameters may be set on the display interface. The preheating parameters may include the preset temperature value and the preset heating time. In particular, the preset temperature value may be set to a range of -10°C ~10°C, the preset heating time may be set to a range of 1∼5 seconds.

In the embodiment, the control software interface installed on the laptop is further arranged with a preheating switch. The default setting of the preheating switch may be ON, i.e., according to the default setting, the preheating routine is required. When the preheating switch is turned off, sending an instruction of stopping preheating to the electronic cigarette by means of the laptop, and then stopping the preheating routine by means of the microcontroller MCU of the electronic cigarette such that the heating device of the electronic cigarette is controlled to not preheat or stop preheating. The preheating switch may be configured to have a default state in which the preheating switch is restored back to ON each time when the electronic cigarette is restarted after being shut off.

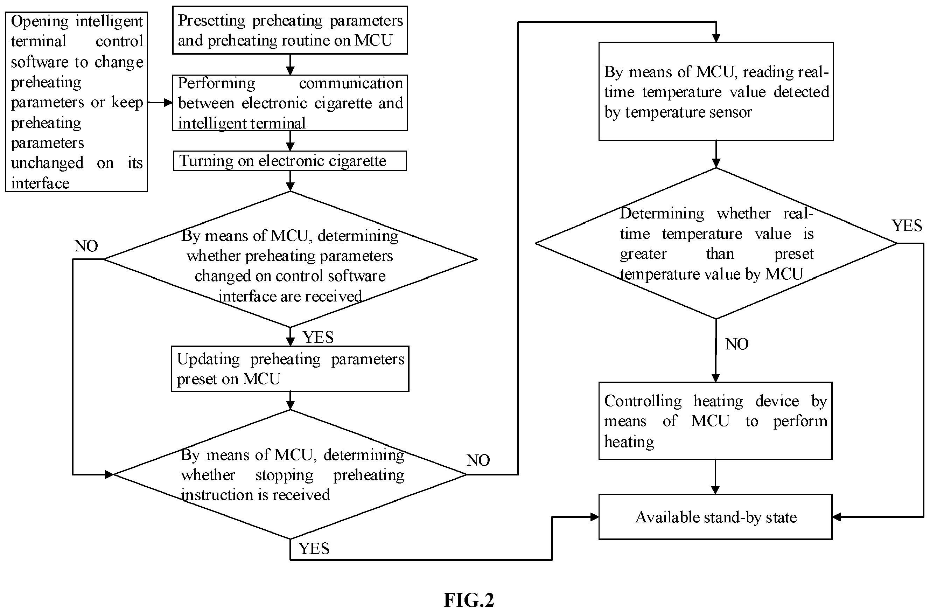

Referring to FIG.2, the electronic cigarette preheating method according to the second embodiment comprises steps as follows.
(1) Presetting the preheating parameters and the preheating routine on the microcontroller MCU;
(2) Opening the intelligent terminal to change the preheating parameters or keep the preheating parameters unchanged on the control software interface;
(3) Performing communication between the electronic cigarette and the intelligent terminal;
(4) Turning on the electronic cigarette;
(5) By means of the microcontroller MCU arranged in the electronic cigarette, determining whether the preheating parameters changed on the control software interface are received or not, if yes, go to next step; if no, go to step (7);
(6) Updating the preheating parameters preset on the microcontroller MCU using the preheating parameters changed on the control software interface;
(7) By means of the microcontroller MCU, determining whether the electronic cigarette receives an instruction of stopping preheating sent from the preheating switch of the control software interface or not, if yes, go to step (11); if no, go to next step;
(8) Detecting the real-time temperature value by means of the temperature sensor, and reading the real-time temperature value by means of the microcontroller MCU;
(9) Determining whether the real-time temperature value is greater than the preset temperature value or not by means of the microcontroller MCU, if yes, go to step (11); if no, go to next step;
(10) Controlling the heating device by means of the microcontroller MCU to perform heating for the preset heating time of the preheating parameters;
(11) Entering the available stand-by state of the electronic cigarette.

### Third embodiment

In the electronic cigarette preheating method according to the embodiment, the communication connection established between the intelligent terminal and the electronic cigarette may be wireless Bluetooth connection. The intelligent terminal may be a smartphone installed with APP control software and APP display interface. After the APP control software is opened, new preheating parameters may be set on the APP display interface. The preheating parameters may include the preset temperature value and the preset heating time.

In particular, the preset temperature value according to the embodiment may be set to a range of -10°C~10°C, the preset heating time may be set to a range of 1∼5 seconds.

In the embodiment, the APP control software interface installed on the smartphone is further arranged with a preheating switch. The default setting of the preheating switch may be ON, i.e., according to the default setting, the preheating routine is required. When the user clicks and turns off the preheating switch, sending an instruction of stopping preheating to the electronic cigarette through Bluetooth communication by means of the smartphone APP, and then stopping the preheating routine by means of the microcontroller MCU of the electronic cigarette such that the heating device of the electronic cigarette is controlled to not preheat or stop preheating. The preheating switch may be configured to have a default state in which the preheating switch is restored back to ON each time when the electronic cigarette is restarted after being shut off.

When it is necessary to perform preheating, in the meantime controlling the LED indicator light arranged on the electronic cigarette by means of the microcontroller MCU, to emit light for warning. The LED indicator light may emit light to warn the user that the electronic cigarette is entering the preheating routine. During such period, the electronic cigarette cannot produce vapor normally. When the preheating is finished, controlling the vibrator arranged on the electronic cigarette by means of the microcontroller MCU, to provide vibration for warning.

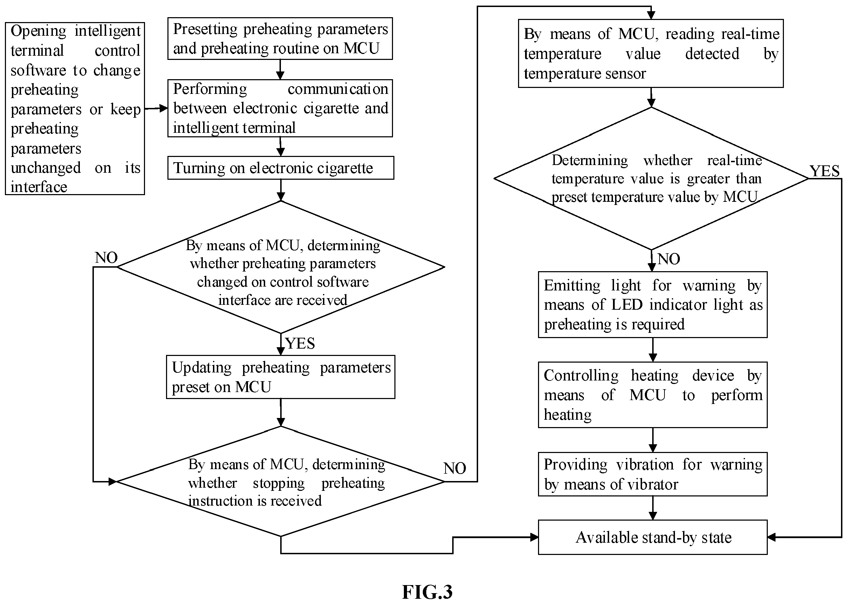

Referring to FIG.3, the electronic cigarette preheating method according to the third embodiment comprises steps as follows.
(1) Presetting the preheating parameters and the preheating routine on the microcontroller MCU;
(2) Opening the intelligent terminal to change the preheating parameters or keep the preheating parameters unchanged on the control software interface;
(3) Performing communication between the electronic cigarette and the intelligent terminal;
(4) Turning on the electronic cigarette;
(5) By means of the microcontroller MCU arranged in the electronic cigarette, determining whether the preheating parameters changed on the control software interface are received or not, if yes, go to next step; if no, go to step (7);
(6) Updating the preheating parameters preset on the microcontroller MCU using the preheating parameters changed on the control software interface;
(7) By means of the microcontroller MCU, determining whether the electronic cigarette receives an instruction of stopping preheating sent from the preheating switch of the control software interface or not, if yes, go to step (12); if no, go to next step;
(8) Detecting the real-time temperature value by means of the temperature sensor, and reading the real-time temperature value by means of the microcontroller MCU;
(9) Determining whether the real-time temperature value is greater than the preset temperature value or not by means of the microcontroller MCU, if yes, go to step (12); if no, go to next step;
(10) Emitting light for warning by means of the LED indicator light as the preheating is required;
(11) Controlling the heating device by means of the microcontroller MCU to perform heating for the preset heating time;
(12) Providing vibration for warning by means of the vibrator;
(13) Entering the available stand-by state of the electronic cigarette.

### Fourth embodiment

In the electronic cigarette preheating method according to the embodiment, the communication connection established between the intelligent terminal and the electronic cigarette may be wireless Bluetooth connection. The intelligent terminal may be a smartphone installed with APP control software and APP display interface. After the APP control software is opened, new preheating parameters may be set on the APP display interface. The preheating parameters may include the preset temperature value, the preset heating time, and the preset stand-by time. As the preheating parameters include the preset stand-by time, after electronic cigarette enters the available stand-by state, the electronic cigarette will automatically shut down if the electronic cigarette detects that the user does not take even a puff within the preset stand-by time. In addition, according to the embodiment, the microcontroller MCU is configured to recurrently detect real-time temperature and determine whether the preheating is required again or not within the preset stand-by time, if yes, controlling the heating device of the electronic cigarette by means of the microcontroller MCU to perform heating again.

In the embodiment, the preset heating time may be set as a function which is inversely proportional to the real-time temperature value. That is, the lower the detected real-time temperature value, the longer the period of heating time. In this way, more energy may be provided, and improved preheating effect may be achieved.

In another embodiment, the preheating parameters further include the preset preheating power. The preset preheating power may be a constant value for example set to a range of 2W∼6W. The preset preheating power may be set as a function which is inversely proportional to the real-time temperature value. That is, the lower the real-time temperature value, the greater the preset preheating power. In this way, more energy may be provided, and improved preheating effect may be achieved.

In particular, the preset temperature value according to the embodiment may be set to a range of -10°C~10°C, the stand-by time may be set to a range of 5∼10 minutes. The preset heating time may be set as a function which is inversely proportional to the real-time temperature value.

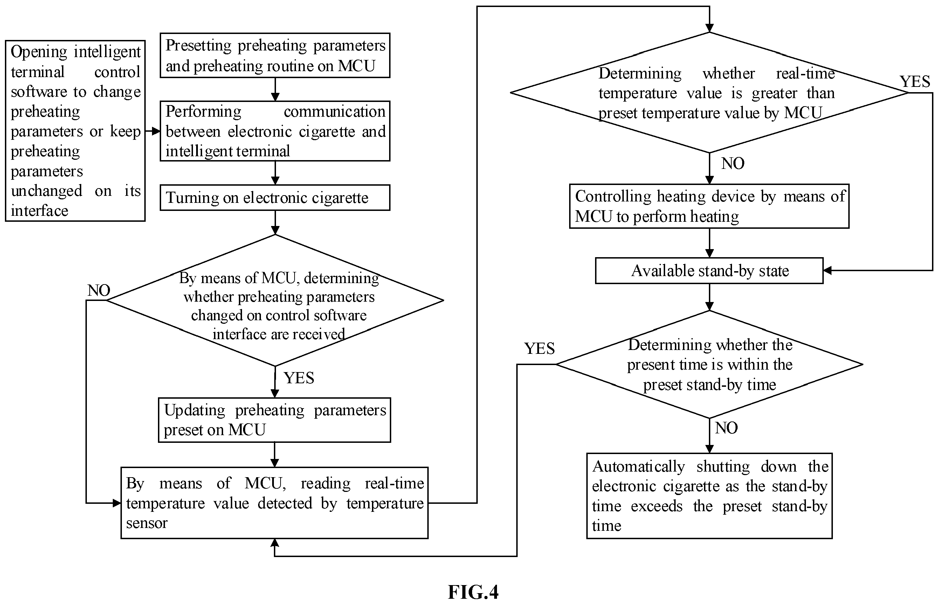

Referring to FIG.4, the electronic cigarette preheating method according to the fourth embodiment comprises steps as follows.
(1) Presetting the preheating parameters and the preheating routine on the microcontroller MCU;
(2) Opening the intelligent terminal to change the preheating parameters or keep the preheating parameters unchanged on the control software interface;
(3) Performing communication between the electronic cigarette and the intelligent terminal;
(4) Turning on the electronic cigarette;
(5) By means of the microcontroller MCU arranged in the electronic cigarette, determining whether the preheating parameters changed on the control software interface are received or not, if yes, go to next step; if no, go to step (7);
(6) Updating the preheating parameters preset on the microcontroller MCU using the preheating parameters changed on the control software interface;
(7) Detecting the real-time temperature value by means of the temperature sensor, and reading the real-time temperature value by means of the microcontroller MCU;
(8) Determining whether the real-time temperature value is greater than the preset temperature value or not by means of the microcontroller MCU, if yes, go to step (10); if no, go to next step;
(9) Controlling the heating device by means of the microcontroller MCU to perform heating for the preset heating time;
(10) Entering the available stand-by state of the electronic cigarette;
(11) Going back to step (7) as the stand-by time does not pass;
(12) Automatically shutting down the electronic cigarette as the stand-by time exceeds the preset stand-by time.

### Embodiment of another technical solution according to the disclosure

An electronic cigarette preheating system comprises an electronic cigarette and an intelligent terminal which establish a communication connection with each other to perform data interaction. The electronic cigarette comprises a liquid storage chamber, a heating device, a microcontroller MCU, and a temperature sensor. The microcontroller MCU is installed with the preheating parameters and the preheating routine. The intelligent terminal comprises the control software interface allowed for displaying and changing the preheating parameters. The preheating parameters at least include the preset temperature value, and the preset heating time or the preset target temperature value. The preheating routine is configured in such a manner that, when the electronic cigarette is turned on, the preheating parameters changed on the control software interface are sent to the microcontroller MCU, to replace previous preset preheating parameters. The temperature sensor is configured to detect the real-time temperature value. The microcontroller MCU is configured to compare the real-time temperature value with the preset temperature value and determine whether preheating of the cigarette liquid stored inside the liquid storage chamber is required or not. If no, the electronic cigarette directly enters an available stand-by state. If yes, the heating device arranged in the electronic cigarette is controlled by means of the microcontroller MCU to perform heating for the preset heating time or until the preset target temperature value is reached. Then, the preheating ends, and the electronic cigarette enters the available stand-by state. Among the preheating parameters, either the preset heating time or the preset target temperature value, but not both at the same time, may be set.

The heating device is arranged inside the electronic cigarette, and the heating coil is arranged inside the heating device. When the heating coil is energized, it generates heat and heats the cigarette liquid of the electronic cigarette such that the cigarette liquid may be vaporized at high temperature to produce electronic cigarette vapor. The temperature sensor is arranged in the electronic cigarette. Since the preheating aims to the cigarette liquid stored inside the liquid storage chamber and the detection of real time temperature mainly refers to the determination of the temperature of the cigarette liquid, it is advantageous that the temperature sensor is arranged as close as possible to the liquid storage chamber of the electronic cigarette.

The preheating parameters may further include the preset stand-by time. The preheating routine is configured in such a manner that, after the electronic cigarette enters the available stand-by state, the electronic cigarette will automatically shut down if the electronic cigarette detects that the user does not take even a puff within the preset stand-by time.

The preheating parameters may further include the preset preheating power. The intelligent terminal is configured in such a manner that, the preset preheating power may be a constant value or set as a function which is inversely proportional to the real-time temperature value. That is, the lower the real-time temperature value, the greater the preset preheating power. The preset heating time may be set as a function which is inversely proportional to the real-time temperature value. That is, the lower the real-time temperature value, the longer the period of the heating time.

The intelligent terminal according to the disclosure may be a desktop computer, or a laptop, or a tablet computer, or a smartphone. The communication connection may be wireless Bluetooth connection, or wireless WIFI connection, or wireless radio frequency (RFID) connection, or USB wired connection.

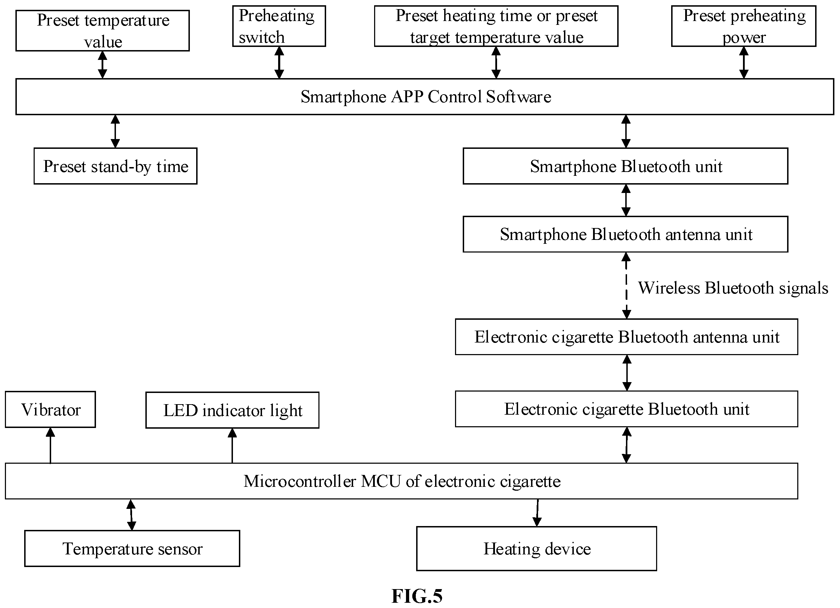

Referring to FIG.5, the intelligent terminal according to the embodiment may be a smartphone installed with APP control software and APP display interface. After the APP control software is opened, new preheating parameters may be set on the APP display interface. The preheating parameters may include the preset temperature value, the preset heating time or the preset target temperature value, the stand-by time, and the preset preheating power. The communication connection may be wireless Bluetooth connection, and the Bluetooth connection device may comprise smartphone Bluetooth unit, smartphone Bluetooth antenna unit, electronic cigarette Bluetooth unit, and electronic cigarette Bluetooth antenna unit. Interactive data of the communication between the smartphone and the electronic cigarette may be transmitted by the smartphone Bluetooth antenna unit and the electronic cigarette antenna unit which send wireless Bluetooth signals to each other.

The control software interface of the smartphone APP is further arranged with the preheating switch. When the preheating switch is turned off, the smartphone sends an instruction of stopping preheating to the electronic cigarette, and then the microcontroller MCU stops the preheating routine such that the heating device of the electronic cigarette is controlled to not preheat or stop preheating.

The electronic cigarette may be further arranged with an LED indicator light and a vibrator. When it is necessary to perform preheating, the microcontroller MCU controls the LED indicator light to emit light for warning. When the preheating is finished, the microcontroller MCU controls the vibrator to provide vibration for warning.

In the electronic cigarette preheating system according to the disclosure the preset temperature value may be set to a range of -10°C~10°C, the preset heating time may be set to a range of 1∼5 seconds, the preset target temperature value may be set to a range of 10°C~80°C, and the preset preheating power may be a constant value set to a range of 2W∼6W.

## Claims

1. An electronic cigarette preheating method, comprising setting preheating parameters and preheating routine in a microcontroller MCU arranged in the electronic cigarette, performing data interaction by a communication connection established between an intelligent terminal and the electronic cigarette, and displaying and changing the preheating parameters on a control software interface of the intelligent terminal, wherein the preheating parameters at least comprise preset temperature value, and preset heating time or preset target temperature value, wherein the preheating routine comprises: when the electronic cigarette is turned on, sending preheating parameters changed on the control software interface to the microcontroller MCU to replace previous preset preheating parameters; detecting real-time temperature value by means of a temperature sensor arranged in the electronic cigarette; by means of the microcontroller MCU, comparing the real-time temperature value with the preset temperature value and determining whether preheating of the cigarette liquid stored inside the liquid storage chamber is required or not, if no, directly entering an available stand-by state of the electronic cigarette, if yes, controlling the heating device arranged in the electronic cigarette by means of the microcontroller MCU to perform heating for the preset heating time or until the preset target temperature value is reached, and then ending the preheating and entering the available stand-by state of the electronic cigarette; **characterized in that**
the preset heating time is a constant value or set as a function which is inversely proportional to the real-time temperature value, that is, the lower the real-time temperature value, the longer the period of the preset heating time;
wherein the preheating parameters further comprises preset stand-by time, and after the electronic cigarette enters the available stand-by state, the electronic cigarette automatically shuts down if it detects that the user does not take even a puff within the preset stand-by time; and
wherein the microcontroller MCU is configured to recurrently detect the real-time temperature and determine whether the preheating is required again or not within the preset stand-by time, if yes, controlling the heating device of the electronic cigarette by means of the microcontroller MCU to perform heating again.

2. The electronic cigarette preheating method according to claim 1, wherein the control software interface is configured with a preheating switch, and when the preheating switch is turned off, sending an instruction of stopping preheating to the electronic cigarette by means of the intelligent terminal, and then stopping the preheating routine by means of the microcontroller MCU such that the heating device of the electronic cigarette is controlled to not preheat or stop preheating.

3. The electronic cigarette preheating method according to claim 1, wherein when the microcontroller MCU determines the preheating is required, controlling an LED indicator light arranged on the electronic cigarette by means of the microcontroller MCU to emit light for warning, and when the preheating is finished, controlling a vibrator arranged on the electronic cigarette by means of the microcontroller MCU to provide vibration for warning.

4. The electronic cigarette preheating method according to claim 1, wherein the preheating parameters further comprises preset preheating power, and the preset preheating power is a constant value or set as a function which is inversely proportional to the real-time temperature value, that is, the lower the real-time temperature value, the greater the preset preheating power.

5. The electronic cigarette preheating method according to claim 1, wherein the method comprises steps of:
(1) presetting the preheating parameters and preheating routine on the microcontroller MCU;
(2) opening the intelligent terminal to change the preheating parameters or keep the preheating parameters unchanged on the control software interface;
(3) performing communication between the electronic cigarette and the intelligent terminal;
(4) turning on the electronic cigarette;
(5) by means of the microcontroller MCU arranged in the electronic cigarette, determining whether preheating parameters changed on the control software interface are received or not, if yes, go to next step; if no, go to step (7);
(6) updating the preheating parameters preset on the microcontroller MCU using the preheating parameters changed on the control software interface;
(7) detecting the real-time temperature value by means of the temperature sensor, and reading the real-time temperature value by means of the microcontroller MCU;
(8) determining whether the real-time temperature value is greater than the preset temperature value or not by means of the microcontroller MCU, if yes, go to step (10); if no, go to next step;
(9) controlling the heating device by means of the microcontroller MCU to perform heating for the preset heating time or until the preset target temperature value is reached;
(10) entering the available stand-by state of the electronic cigarette;
(11) going back to step (7) as the stand-by time does not pass;
(12) automatically shutting down the electronic cigarette as the stand-by time exceeds the preset stand-by time.

6. An electronic cigarette preheating system, comprising an electronic cigarette and an intelligent terminal which establish a communication connection with each other to perform data interaction, wherein the electronic cigarette comprises a liquid storage chamber, a heating device, a microcontroller MCU, and a temperature sensor, wherein the microcontroller MCU is installed with preheating parameters and preheating routine, wherein the intelligent terminal comprises control software interface allowed for displaying and changing the preheating parameters, and the preheating parameters at least comprise preset temperature value, and preset heating time or preset target temperature value, wherein the preheating routine is configured in such a manner that, when the electronic cigarette is turned on, the preheating parameters changed on the control software interface are sent to the microcontroller MCU, to replace previous preset preheating parameters, the temperature sensor is configured to detect the real-time temperature value, the microcontroller MCU is configured to compare the real-time temperature value with the preset temperature value and determine whether preheating of cigarette liquid stored inside the liquid storage chamber is required or not, if no, the electronic cigarette directly enters an available stand-by state, if yes, the heating device arranged in the electronic cigarette is controlled by means of the microcontroller MCU to perform heating for the preset heating time or until the preset target temperature value is reached, and then the preheating ends and the electronic cigarette enters the available stand-by state; **characterized in that**
the preheating parameters further comprise preset stand-by time, the preheating routine is configured in such a manner that, after the electronic cigarette enters the available stand-by state, the electronic cigarette automatically shuts down if it detects that the user does not take even a puff within the preset stand-by time;
wherein the preset heating time is a constant value or set as a function which is inversely proportional to the real-time temperature value, that is, the lower the real-time temperature value, the longer the period of the heating time; and
the microcontroller MCU is configured to recurrently detect the real-time temperature and determine whether the preheating is required again or not within the preset stand-by time, if yes, controlling the heating device of the electronic cigarette by means of the microcontroller MCU to perform heating again.

7. The electronic cigarette preheating system according to claim 6, wherein the preheating parameters further comprise preset preheating power, the preset preheating power is a constant value or set as a function which is inversely proportional to the real-time temperature value, that is, the lower the real-time temperature value, the greater the preset preheating power.

8. The electronic cigarette preheating system according to claim 6, wherein the control software interface is configured with a preheating switch, and when the preheating switch is turned off, the intelligent terminal sends an instruction of stopping preheating to the electronic cigarette, and then the microcontroller MCU stops the preheating routine such that the heating device of the electronic cigarette is controlled to not preheat or stop preheating.

9. The electronic cigarette preheating system according to claim 6, wherein the electronic cigarette is arranged with an LED indicator light and a vibrator, wherein the LED indicator light is controlled by means of the microcontroller MCU to emit light for warning when the preheating is required, and the vibrator is controlled by means of the microcontroller MCU to provide vibration for warning when the preheating is finished.

## Patentansprüche

1. Vorwärmverfahren für eine elektronische Zigarette, umfassend: Einstellen von Vorerwärmungsparametern und einer Vorerwärmungsroutine in einer Mikrocontroller-MCU, die in der elektronischen Zigarette angeordnet ist, Durchführen einer Dateninteraktion durch eine Kommunikationsverbindung, die zwischen einem intelligenten Endgerät und der elektronischen Zigarette eingerichtet ist, und Anzeigen und Ändern der Vorerwärmungsparameter auf einer Steuersoftwareschnittstelle des intelligenten Endgeräts, wobei die Vorerwärmungsparameter zumindest einen voreingestellten Temperaturwert, und eine voreingestellte Heizzeit oder einen voreingestellten Zieltemperaturwert umfassen, wobei die Vorerwärmungsroutine umfasst: wenn die elektronische Zigarette eingeschaltet wird, Senden von Vorerwärmungsparametern, die an der Steuerungssoftwareschnittstelle geändert wurden, an die Mikrocontroller-MCU, um vorherige voreingestellte Vorerwärmungsparameter zu ersetzen; Erkennen eines Echtzeittemperaturwerts mithilfe eines Temperatursensors, der in der elektronischen Zigarette angeordnet ist; mithilfe der Mikrocontroller-MCU, Vergleichen des Echtzeittemperaturwerts mit dem voreingestellten Temperaturwert und Ermitteln, ob ein Vorerwärmen der in der Flüssigkeitsaufbewahrungskammer gespeicherten Zigarettenflüssigkeit erforderlich ist oder nicht, falls nicht, direktes Treten in einen verfügbaren Bereitschaftszustand der elektronischen Zigarette, falls ja, Steuern der Heizvorrichtung, die in der elektronischen Zigarette angeordnet ist, mithilfe der Mikrocontroller-MCU, um eine Erwärmung für die voreingestellte Heizzeit oder bis Erreichen des voreingestellten Zieltemperaturwerts durchzuführen, und danach Beenden der Vorerwärmung und Treten in den verfügbaren Bereitschaftszustand der elektronischen Zigarette; **dadurch gekennzeichnet,**
**dass** die voreingestellte Heizzeit ein konstanter Wert oder als eine Funktion eingestellt ist, die zum Echtzeittemperaturwert umgekehrt proportional ist, das heißt, je niedriger der Echtzeittemperaturwert, desto länger die Dauer der voreingestellten Heizzeit;
wobei die Vorerwärmungsparameter ferner eine voreingestellte Bereitschaftszeit umfassen, und nachdem die elektronische Zigarette in den verfügbaren Bereitschaftszustand getreten ist, sich die elektronische Zigarette automatisch ausschaltet, falls sie erkennt, dass ein Benutzer innerhalb der voreingestellten Bereitschaftszeit keinen einzigen Zug nimmt; und
wobei die Mikrocontroller-MCU ausgelegt ist, die Echtzeittemperatur wiederholt zu erkennen und zu ermitteln, ob die Vorerwärmung innerhalb der voreingestellten Bereitschaftszeit erneut oder nicht erforderlich ist, falls ja, Steuern der Heizvorrichtung der elektronischen Zigarette mithilfe der Mikrocontroller-MCU, um eine erneute Erwärmung durchzuführen.

2. Vorwärmverfahren für eine elektronische Zigarette nach Anspruch 1, wobei die Steuerungssoftwareschnittstelle mit einem Vorerwärmungsschalter ausgelegt ist, und wenn der Vorerwärmungsschalter ausgeschaltet ist, Senden einer Anweisung zum Anhalten der Vorerwärmung an die elektronische Zigarette mithilfe des intelligenten Endgeräts und danach Anhalten der Vorerwärmungsroutine mithilfe der Mikrocontroller-MCU, sodass die Heizvorrichtung der elektronischen Zigarette gesteuert wird, keine Vorerwärmung durchzuführen oder diese anzuhalten.

3. Vorwärmverfahren für eine elektronische Zigarette nach Anspruch 1, wobei, wenn die Mikrocontroller-MCU ermittelt, dass die Vorerwärmung erforderlich ist, Steuern eines auf der elektronischen Zigarette angeordneten LED-Indikatorlichts mithilfe der Mikrocontroller-MCU, um Licht zur Warnung zu emittieren, und wenn die Vorerwärmung abgeschlossen ist, Steuern eines Schwingungserzeugers, der auf der elektronischen Zigarette angeordnet ist, mithilfe der Mikrocontroller-MCU, um zur Warnung eine Vibration abzugeben.

4. Vorwärmverfahren für eine elektronische Zigarette nach Anspruch 1, wobei die Vorerwärmungsparameter ferner eine voreingestellte Vorerwärmungsleistung umfassen und die voreingestellte Vorerwärmungsleistung ein konstanter Wert oder als eine Funktion eingestellt ist, die zum Echtzeittemperaturwert umgekehrt proportional ist, das heißt, je niedriger der Echtzeittemperaturwert, desto größer die voreingestellte Vorerwärmungsleistung.

5. Vorwärmverfahren für eine elektronische Zigarette nach Anspruch 1, wobei das Verfahren die Schritte umfasst zum:
(1) Voreinstellen der Vorerwärmungsparameter und Vorerwärmungsroutine auf der Mikrocontroller-MCU;
(2) Öffnen des intelligenten Endgeräts zum Ändern der Vorerwärmungsparameter oder unverändertes Beibehalten der Vorerwärmungsparameter an der Steuerungssoftwareschnittstelle;
(3) Durchführen einer Kommunikation zwischen der elektronischen Zigarette und dem intelligenten Endgerät;
(4) Einschalten der elektronischen Zigarette;
(5) mithilfe der in der elektronischen Zigarette angeordneten Mikrocontroller-MCU, Ermitteln, ob an der Steuerungssoftwareschnittstelle geänderte Vorerwärmungsparameter empfangen wurden oder nicht, falls ja, Gehen zum nächsten Schritt; falls nein, Gehen zu Schritt (7);
(6) Aktualisieren der auf der Mikrocontroller-MCU voreingestellten Vorerwärmungsparameter unter Verwendung der an der Steuerungssoftwareschnittstelle geänderten Vorerwärmungsparameter;
(7) Erkennen des Echtzeittemperaturwerts mithilfe des Temperatursensors und Lesen des Echtzeittemperaturwerts mithilfe der Mikrocontroller-MCU;
(8) Ermitteln, ob der Echtzeittemperaturwert größer als der voreingestellte Temperaturwert ist, mithilfe der Mikrocontroller-MCU, falls ja, Gehen zu Schritt (10); falls nein, Gehen zum nächsten Schritt;
(9) Steuern der Heizvorrichtung mithilfe der Mikrocontroller-MCU, um ein Erwärmen für die voreingestellte Heizzeit oder bis zum Erreichen des voreingestellten Zieltemperaturwerts durchzuführen;
(10) Treten in den verfügbaren Bereitschaftszustand der elektronischen Zigarette;
(11) Zurückkehren zu Schritt (7), wenn die Bereitschaftszeit noch nicht verstrichen ist;
(12) automatisches Ausschalten der elektronischen Zigarette, wenn die Bereitschaftszeit die voreingestellte Bereitschaftszeit überschreitet.

6. Vorwärmsystem für eine elektronische Zigarette, umfassend eine elektronische Zigarette und ein intelligentes Endgerät, die eine Kommunikationsverbindung miteinander aufnehmen, um eine Dateninteraktion durchzuführen, wobei die elektronische Zigarette eine Flüssigkeitsaufbewahrungskammer, eine Heizvorrichtung, eine Mikrocontroller-MCU und einen Temperatursensor umfasst, wobei die Mikrocontroller-MCU mit Vorerwärmungsparametern und einer Vorerwärmungsroutine installiert ist, wobei das intelligente Endgerät eine Steuerungssoftwareschnittstelle umfasst, die ein Anzeigen und Ändern der Vorerwärmungsparameter ermöglicht, und die Vorerwärmungsparameter zumindest einen voreingestellten Temperaturwert, und eine voreingestellte Heizzeit oder einen voreingestellten Zieltemperaturwert umfassen, wobei die Vorerwärmungsroutine auf eine derartige Weise ausgelegt ist, dass, wenn die elektronische Zigarette eingeschaltet wird, die an der Steuerungssoftwareschnittstelle geänderten Vorerwärmungsparameter an die Mikrocontroller-MCU gesendet werden, um vorherige voreingestellte Vorerwärmungsparameter zu ersetzen, der Temperatursensor ausgelegt ist, den Echtzeittemperaturwert zu erkennen, die Mikrocontroller-MCU ausgelegt ist, den Echtzeittemperaturwert mit dem voreingestellten Temperaturwert zu vergleichen und zu ermitteln, ob ein Vorerwärmen der in der Flüssigkeitsaufbewahrungskammer gespeicherten Zigarettenflüssigkeit erforderlich ist oder nicht, falls nicht, tritt die elektronische Zigarette direkt in einen verfügbaren Bereitschaftszustand, falls ja, wird die Heizvorrichtung, die in der elektronischen Zigarette angeordnet ist, mithilfe der Mikrocontroller-MCU gesteuert, um eine Erwärmung für die voreingestellte Heizzeit oder bis Erreichen des voreingestellten Zieltemperaturwerts durchzuführen, und danach wird die Vorerwärmung beendet und die elektronische Zigarette tritt in den verfügbaren Bereitschaftszustand; **dadurch gekennzeichnet, dass** die Vorerwärmungsparameter ferner eine voreingestellte Bereitschaftszeit umfassen, die Vorerwärmungsroutine auf eine solche Weise konfiguriert ist, dass, nachdem die elektronische Zigarette in den verfügbaren Bereitschaftszustand getreten ist, sich die elektronische Zigarette automatisch ausschaltet, falls sie erkennt, dass ein Benutzer innerhalb der voreingestellten Bereitschaftszeit keinen einzigen Zug nimmt;
wobei die voreingestellte Heizzeit ein konstanter Wert oder als eine Funktion eingestellt ist, die zum Echtzeittemperaturwert umgekehrt proportional ist, das heißt, je niedriger der Echtzeittemperaturwert, desto länger die Dauer der Heizzeit; und
wobei die Mikrocontroller-MCU ausgelegt ist, die Echtzeittemperatur wiederholt zu erkennen und zu ermitteln, ob die Vorerwärmung innerhalb der voreingestellten Bereitschaftszeit erneut oder nicht erforderlich ist, falls ja, Steuern der Heizvorrichtung der elektronischen Zigarette mithilfe der Mikrocontroller-MCU, um eine erneute Erwärmung durchzuführen.

7. Vorwärmsystem für eine elektronische Zigarette nach Anspruch 6, wobei die Vorerwärmungsparameter ferner eine voreingestellte Vorerwärmungsleistung umfassen, die voreingestellte Vorerwärmungsleistung ein konstanter Wert oder als eine Funktion eingestellt ist, die zum Echtzeittemperaturwert umgekehrt proportional ist, das heißt, je niedriger der Echtzeittemperaturwert, desto größer die voreingestellte Vorerwärmungsleistung.

8. Vorwärmsystem für eine elektronische Zigarette nach Anspruch 6, wobei die Steuerungssoftwareschnittstelle mit einem Vorerwärmungsschalter ausgelegt ist, und wenn der Vorerwärmungsschalter ausgeschaltet ist, das intelligente Endgerät eine Anweisung zum Anhalten der Vorerwärmung an die elektronische Zigarette sendet und danach hält die Mikrocontroller-MCU die Vorerwärmungsroutine an, sodass die Heizvorrichtung der elektronischen Zigarette gesteuert wird, keine Vorerwärmung durchzuführen oder diese anzuhalten.

9. Vorwärmsystem für eine elektronische Zigarette nach Anspruch 6, wobei die elektronische Zigarette mit einem LED-Indikatorlicht und einem Schwingungserzeuger ausgestattet ist, wobei das LED-Indikatorlicht mithilfe der Mikrocontroller-MCU gesteuert wird, um Licht zur Warnung zu emittieren, wenn die Vorerwärmung erforderlich ist, und der Schwingungserzeuger mithilfe der Mikrocontroller-MCU gesteuert wird, um zur Warnung eine Vibration abzugeben, wenn die Vorerwärmung abgeschlossen ist.

## Revendications

1. Procédé de préchauffage de cigarette électronique, comprenant régler des paramètres de préchauffage et une routine de préchauffage dans un microcontrôleur MCU agencé dans la cigarette électronique, réaliser une interaction de données par une connexion de communication établie entre un terminal intelligent et la cigarette électronique, et afficher et changer les paramètres de préchauffage sur une interface logicielle de commande du terminal intelligent, dans lequel les paramètres de préchauffage comprennent au moins une valeur de température prédéfinie, et une durée de chauffage prédéfinie ou une valeur de température cible prédéfinie, dans lequel la routine de préchauffage comprend : lorsque la cigarette électronique est allumée, envoyer des paramètres de préchauffage changés sur l'interface logicielle de commande au microcontrôleur MCU pour remplacer des paramètres de préchauffage prédéfinis antérieurs ; détecter une valeur de température en temps réel au moyen d'un capteur de température agencé dans la cigarette électronique ; au moyen du microcontrôleur MCU, comparer la valeur de température en temps réel à la valeur de température prédéfinie et déterminer si le préchauffage du liquide de cigarette stocké à l'intérieur de la chambre de stockage de liquide est requis ou non, si ce n'est pas le cas, entrer directement dans un état d'attente disponible de la cigarette électronique, si c'est le cas, commander le dispositif chauffant agencé dans la cigarette électronique au moyen du microcontrôleur MCU de réaliser un chauffage pendant la durée de chauffage prédéfinie ou jusqu'à ce que la valeur de température cible prédéfinie soit atteinte, puis terminer le préchauffage et entrer dans l'état d'attente disponible de la cigarette électronique ; **caractérisé en ce que**
la durée de chauffage prédéfinie est une valeur constante ou réglée en tant que fonction qui est inversement proportionnelle à la valeur de température en temps réel, c'est-à-dire, plus la valeur de température en temps réel est basse, plus la période de la durée de chauffage prédéfinie est longue ;
dans lequel les paramètres de préchauffage comprennent en outre une durée d'attente prédéfinie, et après que la cigarette électronique entre dans l'état d'attente disponible, la cigarette électronique s'éteint automatiquement si elle détecte que l'utilisateur ne prend même pas une bouffée en l'espace de la durée d'attente prédéfinie ; et
dans lequel le microcontrôleur MCU est configuré pour détecter de manière récurrente la température en temps réel et déterminer si le préchauffage est requis de nouveau ou non en l'espace de la durée d'attente prédéfinie, si c'est le cas, commander le dispositif chauffant de la cigarette électronique au moyen du microcontrôleur MCU de réaliser de nouveau un chauffage.

2. Procédé de préchauffage de cigarette électronique selon la revendication 1, dans lequel l'interface logicielle de commande est configurée avec un commutateur de préchauffage, et lorsque le commutateur de préchauffage est éteint, envoyer une instruction d'arrêter le préchauffage à la cigarette électronique au moyen du terminal intelligent, puis arrêter la routine de préchauffage au moyen du microcontrôleur MCU de sorte que le dispositif chauffant de la cigarette électronique est commandé de ne pas préchauffer ou d'arrêter le préchauffage.

3. Procédé de préchauffage de cigarette électronique selon la revendication 1, dans lequel lorsque le microcontrôleur MCU détermine que le préchauffage est requis, commander un voyant lumineux à LED agencé sur la cigarette électronique au moyen du microcontrôleur MCU d'émettre de la lumière pour avertissement, et lorsque le préchauffage est fini, commander un vibrateur agencé sur la cigarette électronique au moyen du microcontrôleur MCU de fournir une vibration pour avertissement.

4. Procédé de préchauffage de cigarette électronique selon la revendication 1, dans lequel les paramètres de préchauffage comprennent en outre une puissance de préchauffage prédéfinie, et la puissance de préchauffage prédéfinie est une valeur constante ou réglée en tant que fonction qui est inversement proportionnelle à la valeur de température en temps réel, c'est-à-dire, plus la valeur de température en temps réel est basse, plus la puissance de préchauffage prédéfinie est élevée.

5. Procédé de préchauffage de cigarette électronique selon la revendication 1, dans lequel le procédé comprend les étapes consistant à :
(1) prédéfinir les paramètres de préchauffage et la routine de préchauffage sur le microcontrôleur MCU ;
(2) ouvrir le terminal intelligent pour changer les paramètres de préchauffage ou garder les paramètres de préchauffage inchangés sur l'interface logicielle de commande ;
(3) réaliser une communication entre la cigarette électronique et le terminal intelligent ;
(4) allumer la cigarette électronique ;
(5) au moyen du microcontrôleur MCU agencé dans la cigarette électronique, déterminer si des paramètres de préchauffage changés sur l'interface logicielle de commande sont reçus ou non, si c'est le cas, aller à l'étape suivante ; sinon, aller à l'étape (7) ;
(6) mettre à jour les paramètres de préchauffage prédéfinis sur le microcontrôleur MCU en utilisant les paramètres de préchauffage changés sur l'interface logicielle de commande ;
(7) détecter la valeur de température en temps réel au moyen du capteur de température et lire la valeur de température en temps réel au moyen du microcontrôleur MCU ;
(8) déterminer si la valeur de température en temps réel est supérieure à la valeur de température prédéfinie ou non au moyen du microcontrôleur MCU, si c'est le cas, aller à l'étape (10) ; sinon, aller à l'étape suivante ;
(9) commander le dispositif chauffant au moyen du microcontrôleur MCU de réaliser un chauffage pendant la durée de chauffage prédéfinie ou jusqu'à ce que la valeur de température cible prédéfinie soit atteinte ;
(10) entrer dans l'état d'attente disponible de la cigarette électronique ;
(11) retourner à l'étape (7) lorsque la durée d'attente ne s'écoule pas ;
(12) éteindre automatiquement la cigarette électronique lorsque la durée d'attente dépasse la durée d'attente prédéfinie.

6. Système de préchauffage de cigarette électronique, comprenant une cigarette électronique et un terminal intelligent qui établissent une connexion de communication l'un avec l'autre pour réaliser une interaction de données, dans lequel la cigarette électronique comprend une chambre de stockage de liquide, un dispositif chauffant, un microcontrôleur MCU et un capteur de température, dans lequel le microcontrôleur MCU est installé avec des paramètres de préchauffage et une routine de préchauffage, dans lequel le terminal intelligent comprend une interface logicielle de commande autorisée à afficher et changer les paramètres de préchauffage, et les paramètres de préchauffage comprennent au moins une valeur de température prédéfinie, et une durée de chauffage prédéfinie ou une valeur de température cible prédéfinie, dans lequel la routine de préchauffage est configurée de telle sorte que, lorsque la cigarette électronique est allumée, les paramètres de préchauffage changés sur l'interface logicielle de commande sont envoyés au microcontrôleur MCU pour remplacer des paramètres de préchauffage prédéfinis antérieurs, le capteur de température est configuré pour détecter la valeur de température en temps réel, le microcontrôleur MCU est configuré pour comparer la valeur de température en temps réel à la valeur de température prédéfinie et déterminer si le préchauffage de liquide de cigarette stocké à l'intérieur de la chambre de stockage de liquide est requis ou non, si ce n'est pas le cas, la cigarette électronique entre directement dans un état d'attente disponible, si c'est le cas, le dispositif chauffant agencé dans la cigarette électronique est commandé au moyen du microcontrôleur MCU de réaliser un chauffage pendant la durée de chauffage prédéfinie ou jusqu'à ce que la valeur de température cible prédéfinie soit atteinte, puis le préchauffage se termine et la cigarette électronique entre dans l'état d'attente disponible ; **caractérisé en ce que**
les paramètres de préchauffage comprennent en outre une durée d'attente prédéfinie, la routine de préchauffage est configurée de telle sorte que, après que la cigarette électronique entre dans l'état d'attente disponible, la cigarette électronique s'éteint automatiquement si elle détecte que l'utilisateur ne prend même pas une bouffée en l'espace de la durée d'attente prédéfinie ;
dans lequel la durée de chauffage prédéfinie est une valeur constante ou réglée en tant que fonction qui est inversement proportionnelle à la valeur de température en temps réel, c'est-à-dire, plus la valeur de température en temps réel est basse, plus la période de la durée de chauffage est longue ; et
le microcontrôleur MCU est configuré pour détecter de manière récurrente la température en temps réel et déterminer si le préchauffage est requis de nouveau ou non en l'espace de la durée d'attente prédéfinie, si c'est le cas, commander le dispositif chauffant de la cigarette électronique au moyen du microcontrôleur MCU de réaliser de nouveau un chauffage.

7. Système de préchauffage de cigarette électronique selon la revendication 6, dans lequel les paramètres de préchauffage comprennent en outre une puissance de préchauffage prédéfinie, la puissance de préchauffage prédéfinie est une valeur constante ou réglée en tant que fonction qui est inversement proportionnelle à la valeur de température en temps réel, c'est-à-dire, plus la valeur de température en temps réel est basse, plus la puissance de préchauffage prédéfinie est élevée.

8. Système de préchauffage de cigarette électronique selon la revendication 6, dans lequel l'interface logicielle de commande est configurée avec un commutateur de préchauffage, et lorsque le commutateur de préchauffage est éteint, le terminal intelligent envoie une instruction d'arrêter le préchauffage à la cigarette électronique, puis le microcontrôleur MCU arrête la routine de préchauffage de sorte que le dispositif chauffant de la cigarette électronique est commandé de ne pas préchauffer ou d'arrêter le préchauffage.

9. Système de préchauffage de cigarette électronique selon la revendication 6, dans lequel la cigarette électronique est agencée avec un voyant lumineux à LED et un vibrateur, dans lequel le voyant lumineux à LED est commandé au moyen du microcontrôleur MCU d'émettre de la lumière pour avertissement lorsque le préchauffage est requis, et le vibrateur est commandé au moyen du microcontrôleur MCU de fournir une vibration pour avertissement lorsque le préchauffage est fini.
